# EUROPEAN PATENT APPLICATION

(11) **EP 2 278 157 A2**
(43) Date of publication of application: **26.01.2011**
(21) Application number: 10165034.9
(22) Date of filing: 07.06.2010
(51) Int. Cl.: F03D 1/00

(54) **Rail-transportable wind turbine tower**

(30) Priority: 15.06.2009 US 484645
(71) Applicant: General Electric Company, Schenectady, NY 12345 (US)
(72) Inventor: Bagepalli, Bharat, Niskayuna, NY 12309 (US); Karaca, Hueseyin, 44625, Herne (DE); Paura, Ingo, 49716, Meppen (DE); Dean, Nathaniel S., Latham, NY 12110 (US)
(74) Representative: Bedford, Grant Richard

(57) **Abstract**

A tower (1000) is provided having a plurality of axial substantially tubular sections (1031, 1032, 1033) with an outer diameter no greater than a designated maximum diameter. At least one of the sections includes at least one reverse taper portion (1030) located near a base of the tower (1000). The reverse taper portion (1030) has a first end, located near the base, having a first diameter. The reverse taper portion has a second end, opposed to the first end, having a second diameter. The first diameter is smaller than the second diameter.

## Description

The invention relates generally to wind turbine tower construction and more specifically to a wind turbine tower and its method of construction that permits rail transport of sections for large towers.

For many years it has been common practice to build steel wind tower sections separately in a workshop facility and then to move each complete section to the site, where the wind turbine tower installation was performed. The tower sections would typically have a cylindrical or slightly tapered shape, and each of the sections could in turn be divided along axial lines into an adequate number of shells.

Due to the ever-increasing demand for larger capacity towers and consequently larger dimensions of all parts needed to build such towers, a physical limit has been imposed by the infrastructure, e.g. the clearance on a bridge or in a tunnel or underpass.

The wind load increases as square of the wind speed and consequently, the higher the turbine towers are, the stronger should the structure be dimensioned, which in turn means that either the wall thickness should be increased or the diameter extended. It may be advantageous to increase tower diameter rather than the thickness of the steel plate or other wall material. Increased thickness would mean higher material costs and a requirement for heavier transportation vehicles, whether trucks, trains, ships, or helicopters, while diameters need to be small enough to limit vehicle heights in order to pass on bridges and though tunnels and underpasses. Also, thicker steel stock is harder to form and fabricate.

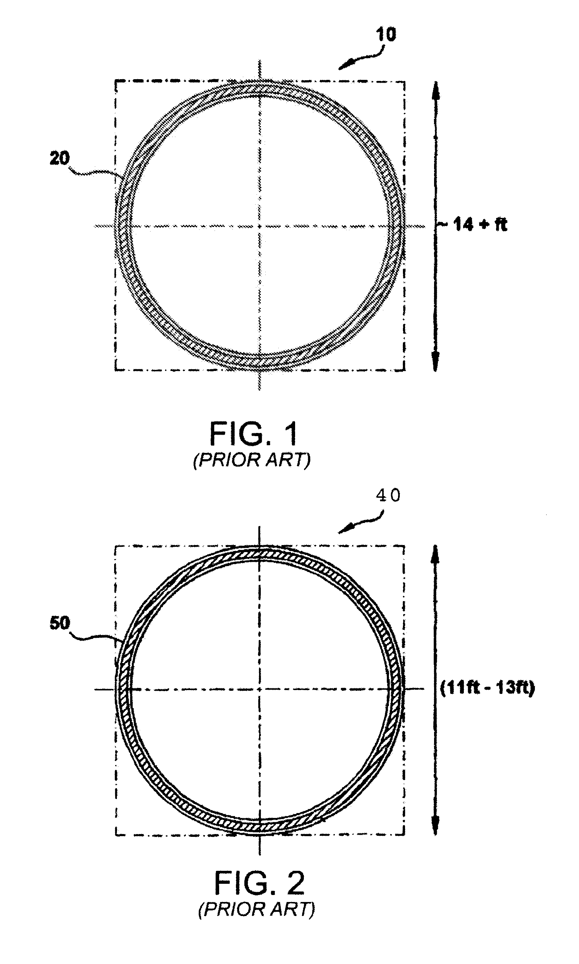

FIGS. 1 and 2, respectively, illustrate maximum space envelopes available for truck and rail transport within the United States. Rail transport is the least expensive mode of transport for large tower sections. An exemplary 80-meter tower typically comprises 3 tower sections of varying diameter and thickness. The present known truckable base and mid-tower sections have about a 14 ft. (∼ 4.3 meters) maximum diameter. The present known top section has about an 11 ft. (∼ 3.4 m) maximum diameter. The space envelope 10 for transport by truck is about 14+ ft. (>= 4.3 m), thus allowing a tubular section 20 of approximately that diameter to fit within the space envelope. The space envelope 40 for transport by rail (refer to FIG. 2) is up to about 11 ft. (∼ 3.4 m) to about 13 ft. (∼ 4 m) on a side, thus allowing a tubular section 50 of up to that approximate diameter to fit within the space envelope. On some rail routes the maximum width is about 13 feet 6 inches (∼ 4.1 m). The present top section is thus transportable by rail. However, the present base and mid-tower sections exceed the rail envelope. The base and mid-tower sections must be transported by truck and generally are sized within the truck-shipping envelope of about 14+ ft (>= 4.3 m). Truck and rail transport outside the United States also are constrained by similar considerations of space envelope but with sizes specific to the locale.

Accordingly, construction of tower sections for large wind turbine towers, where the section diameters fall within the maximum rail transport diameter, but which yet are strong enough to withstand the loads imposed on the sections may be advantageous.

The present invention relates to an apparatus and method for allowing sections of large wind turbine towers to be transported to a windfarm site by rail transport by construction of the tower sections to fall within an allowable space envelope for rail transport.

Briefly in accordance with one aspect of the present invention, a tower is provided having a plurality of axial substantially tubular sections with an outer diameter no greater than a designated maximum diameter. At least one of the sections includes at least one reverse taper portion located near a base of the tower. The reverse taper portion has a first end, located near the base, having a first diameter. The reverse taper portion has a second end, opposed to the first end, having a second diameter. The first diameter is smaller than the second diameter.

In accordance with another aspect of the present invention, a wind turbine tower is provided having a plurality of axial sections with an outer diameter no greater than a designated maximum diameter. The designated maximum diameter being a maximum diameter permitted for rail transport. At least one of the sections includes at least one reverse taper portion located near a base of the tower. The reverse taper portion has a first end, located near the base, having a first diameter. The reverse taper portion has a second end, opposed to the first end, having a second diameter. The first diameter is smaller than the second diameter.

Various features, aspects, and advantages of the present invention will become better understood when the following detailed description is read with reference to the accompanying drawings in which like characters represent like parts throughout the drawings, wherein:
FIG. 1 illustrates a maximum available space envelope for truck transport within the United States;
FIG. 2 illustrates a maximum available space envelope for rail transport within the United States;
FIG. 3 illustrates one known wind turbine;
FIG. 4 illustrates one known wind turbine tower having three main sections and a T-flange;
FIG. 5 illustrates one known wind turbine tower having three main sections, an L-flange and buried adapter;
FIG. 6 illustrates a cross-sectional view of one known wind turbine tower's base section;
FIG. 7 illustrates a cross-sectional view of a wind turbine tower's base section, according to an aspect of the present invention;
FIG. 8 illustrates a cross-sectional view of a wind turbine tower's base section showing the first few cans, according to an aspect of the present invention;
FIG. 9 illustrates a cross-sectional view of a wind turbine tower's base section showing the first few cans, according to an aspect of the present invention;
FIG. 10 illustrates a cross-sectional view of a wind turbine tower showing a base section having a reverse taper portion, according to an aspect of the present invention;
   and
FIG. 11 illustrates a cross-sectional view of a wind turbine tower showing a base section having a reverse stepped portion, according to an aspect of the present invention.

The following embodiments of the present invention have many advantages, including permitting wind turbine tower sections that have previously required large diameters for structural integrity to incorporate reduced diameters that fall within allowable space envelopes for rail transport.

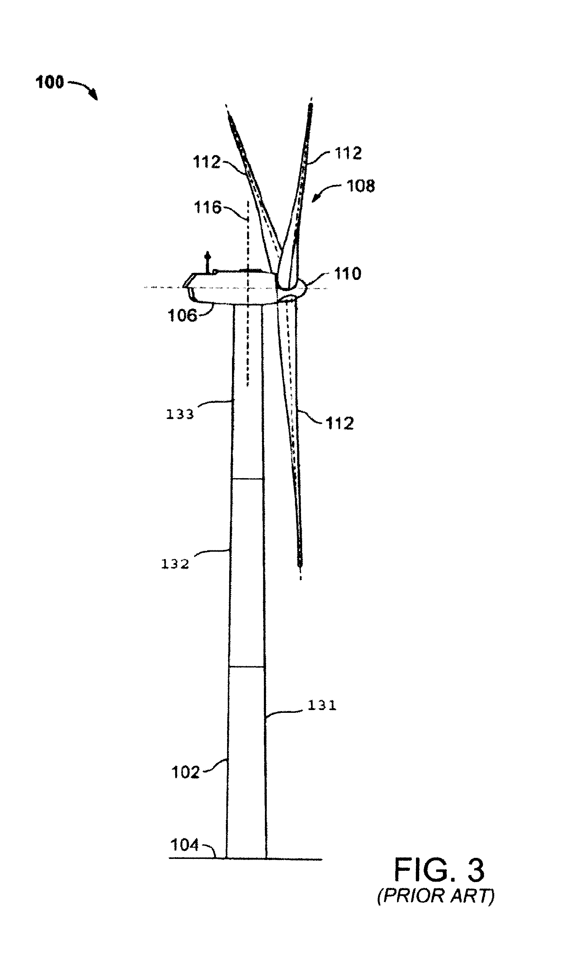

FIG. 3 is a schematic illustration of an exemplary wind turbine 100. In the exemplary embodiment, wind turbine 100 is a horizontal axis wind turbine. Alternatively, wind turbine 100 may be a vertical axis wind turbine. Wind turbine 100 has a tower 102 extending from a supporting surface 104, a nacelle 106 mounted on tower 102, and a rotor 108 coupled to nacelle 106. Rotor 108 has a rotatable hub 110 and a plurality of rotor blades 112 coupled to hub 110. In the exemplary embodiment, rotor 108 has three rotor blades 112. In an alternative embodiment, rotor 108 may have more or less than three rotor blades 112. In the exemplary embodiment, tower 102 is fabricated from tubular steel and has a cavity (not shown in FIG. 3) extending between supporting surface 104 and nacelle 106. Typically, tower 102 is comprised of three sections, bottom section 131, middle section 132 and top section 133. Each section is typically constructed from a plurality of cylindrical "cans" stacked one upon the other. For example, each can may be about three meters high and each section may include about seven to about ten cans. However, each tower section may have more or less than seven to ten cans. The cans are usually rolled steel cylinders and the top of the tower 102 often has a smaller diameter than the base of the tower. In an alternate embodiment, tower 102 is a lattice tower or a combination of lattice and tubular tower construction.

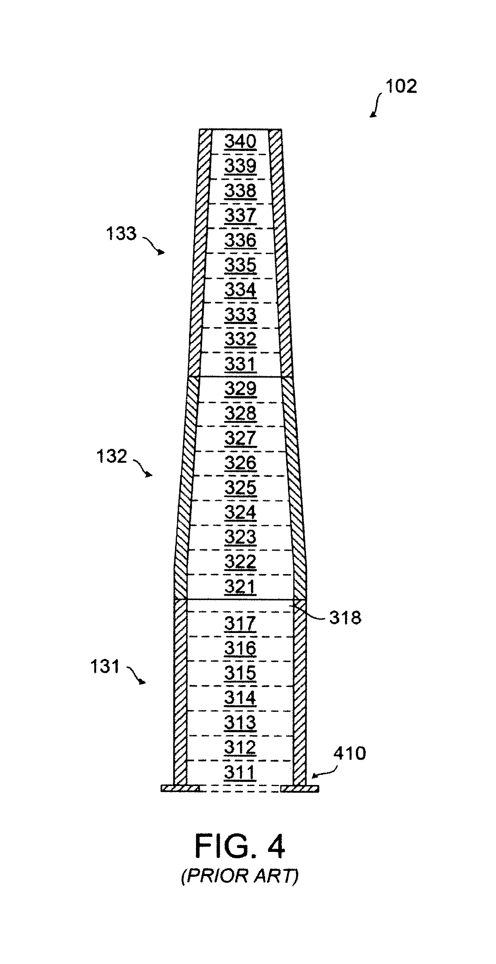

FIG. 4 illustrates a side view of one known tower 102. As described previously, tower 102 is typically comprised of three main sections, a bottom section 131, middle section 132 and top section 133. Each main section may be comprised of a plurality of individual cylindrical cans, which are typically a cylinder of rolled steel. Bottom section 131, in this example, contains eight cylindrical cans 311-318. Each can is fabricated from steel and rolled into a cylindrical shape, and may be welded or bolted to adjacent cans. The thickness and diameter of the cans may vary. The lower cans are usually thicker than the upper cans. For example, the lowest can 311 may have a wall thickness of about 20 mm to about 45 mm and an overall diameter of about 14 feet (∼ 4.3 m), and the highest can 318 in this section may have a wall thickness of about 12 mm to about 25 mm and a diameter of about 14 feet (∼ 4.3 m). The bottom section is substantially cylindrical overall, but may have a slight forward taper (or reducing diameter) as the elevation increases.

The middle section 132 is comprised of cans 321-329 and the wall thickness of each can may vary from about 10 mm to about 25 mm. The diameter of the cans may vary from about 12 to about 14 feet (∼ 3.7 m to 4.3 m). The top section 133 is comprised of cans 331-340 and the wall thickness of each can may vary from about 8 mm to about 15 mm. The diameter of the cans may vary from about 10 feet to about 12 feet (∼ 3.0 m to 3.7 m). The height (or length) of each section may also vary. Typically the bottom section 131 is the shortest as it is also the heaviest. For an 80 to 100 meter tower, each section 131, 132, 133 may have a length of about 20 to about 35 meters.

Typically, a wind turbine customer will desire to attach the tower 102 to a ground foundation via a T-flange 410, which is a continuous part of the bottom shell section of the tower. The T-flange 410 consists of two annuli of a series of bolted connections. Between the two annuli, lies the bottom most part of the tower wall structure, consisting of a typically steel shell that continues up to the wind turbine nacelle or whatever entity is to be employed. A material shell, of which the tower consists, is responsible for carrying the loads induced by the wind or other necessary application. A shell of this kind most cost efficiently resists these bending loads by having the maximum possible diameter about a neutral axis 116. The T-flange 410, whose outer bolt annulus must be accommodated in transportation, forces the tower shell structure to not use the maximum outer diameter allowed by transportation and thus renders the tower shell structure less efficient in load resistance than might be possible with other configurations. By not using the maximum outer diameter, a cost inefficiency is manifested by having to increase tower shell thickness not only in the bottom tower shell, but potentially in all tower sections where the maximum potential outer diameter is not utilized. Each additional increase in thickness at a fixed outer diameter is less efficient than the previous due to ever decreasing average shell diameter and load bearing capability. Increasing tower shell diameter will allow for relative shell thicknesses to decrease roughly to a square power.

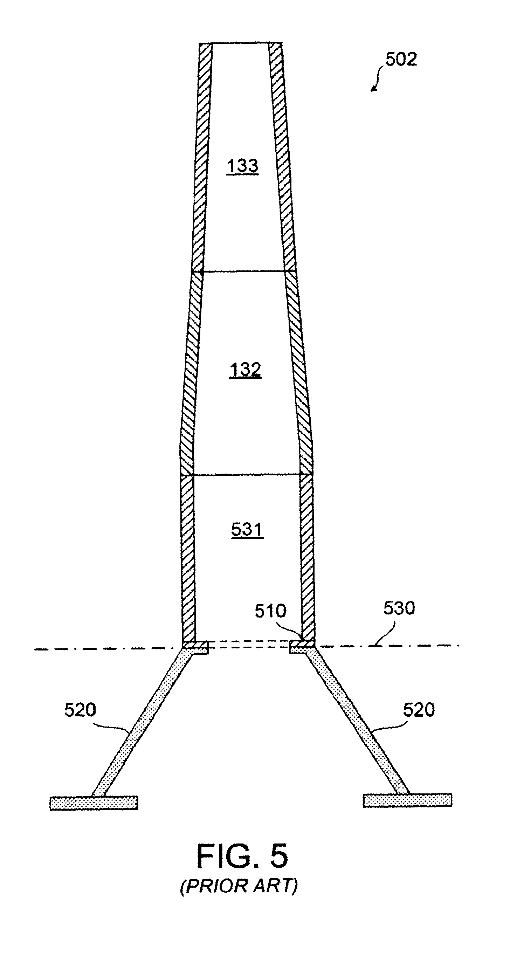

FIG. 5 illustrates a cross-sectional view of one known tower incorporating an L-flange type mounting arrangement. The tower 502 includes bottom section 531, middle section 132 and top section 133. The bottom of section 531 includes L-flange 510. The L-flange 510 consists of one annulus with a series of bolted connections. On the outer portion of the annulus lies the bottom most part of the tower wall structure, consisting of a typically steel shell that continues up to the wind turbine nacelle or whatever entity is to be employed. The L-flange 510 is typically fastened to a subterranean adapter 520 that is buried below ground level 530.

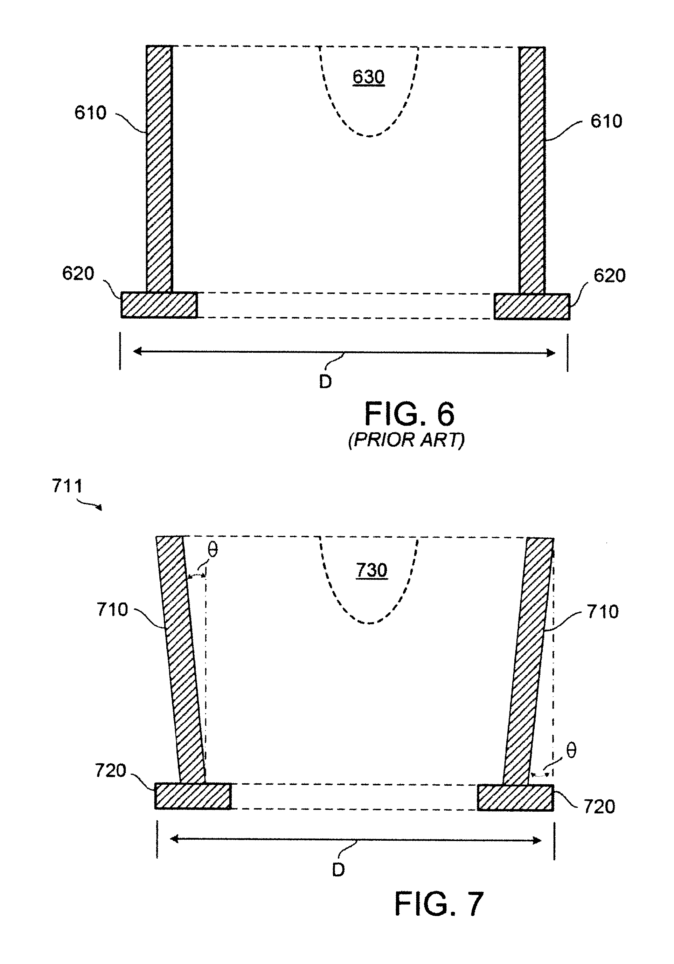

FIG. 6 illustrates a cross-section of bottom can 311. The bottom can has side walls 610 and a base 620. The region 630 is a cut-out for a door that permits entrance into the base of tower 102. The remainder of the cut-out is typically contained in the next can 312. The lower portion of this section is typically referred to as a T-flange, as the wall 610 and base 620 are joined orthogonally to each other. The base 620 is typically bolted to a foundation (not shown) on the inner and outer portions of wall 610. The diameter D of the outer portions of the T-flange is typically about 15 feet (∼ 4.6 m) or more. A typical diameter of 15 feet (∼ 4.6 m) makes this section too wide to ship via conventional rail routes. If the diameter of the T-flange was reduced to 13 feet 6 inches (∼ 4.1 m) or less, the tower would become too thick and heavy to be economical.

FIG. 7 illustrates a cross-sectional view of a bottom can having a T-flange, according to an aspect of the present invention. The side walls 710 of bottom can 711 are configured to be non-orthogonal to base 720. The angle θ between a vertical line (the vertical dotted lines in FIG. 7) and the side wall 710 is about one to about five degrees. However, angles above and below this range could also be employed, as desired in the specific application. The diameter D of the outer portions of the base 720 can be designed to be about 13 feet 6 inches (∼ 4.1 m) or less, and the thickness of the side walls 710 may range between about 20 mm to about 50 mm. However, it is to be understood that thicknesses above and below this range could also be employed, as desired in the specific application. The angle of the first section may be viewed as having a reverse taper, compared to some known towers that typically have a forward taper that decreases with increasing elevation. Various embodiments of the present invention, however, provide a tower having a lower portion with a reverse taper where the diameter of the can (or tower portion) has a diameter that increases with increasing height or elevation. The tower section 131 is typically designed to have a mounting T-flange that is used to anchor it to the foundation (not shown), and a reverse taper in this lower section would mean having one or more sections that have a smaller diameter closer to the ground than at selected heights further up the tower.
The T-flange type tower foundation is commonly used in the United States, whereas an L-flange tower mount is more commonly used outside of the United States. The L-flange requires the use of an adaptor that may be embedded in the soil or foundation, and may add additional cost to the tower system.

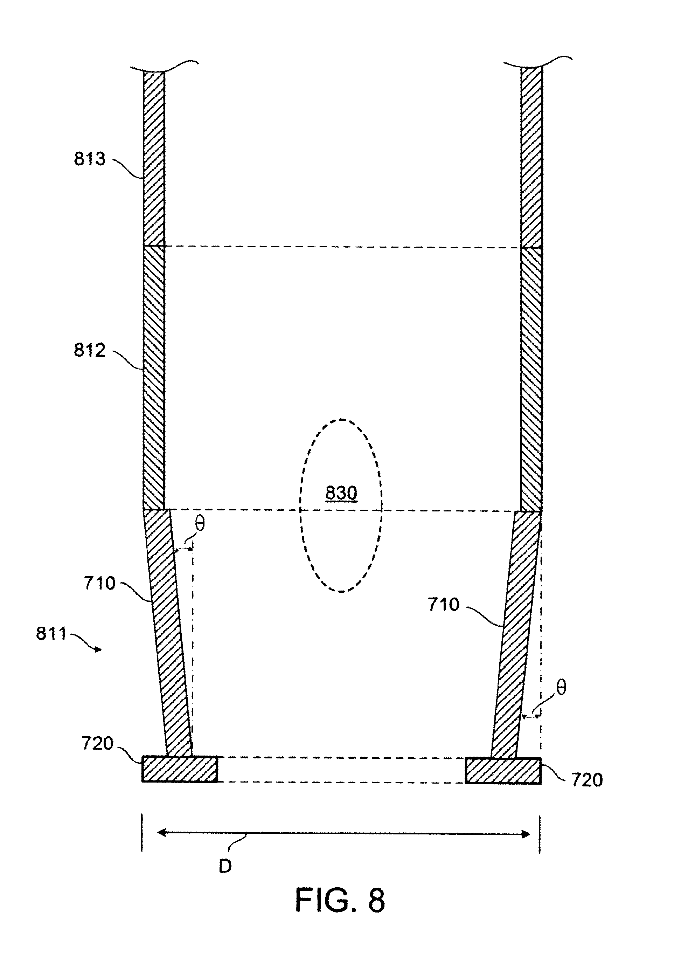

FIG. 8 illustrates a cross-sectional view of the first few cans in the bottom section of an exemplary wind turbine tower, according to an aspect of the present invention. The first can 811 may be thicker than the subsequent cans 812 and 813. For example the thickness of the side walls 710 may range between about 20 mm to about 50 mm, and the thickness of the side walls of cans 812, 813 and some of the subsequent cans may range between about 20 mm to about 50 mm. The angle θ between a vertical line (the vertical dotted lines in FIG. 8) and the side wall 710 is about one to about five degrees.

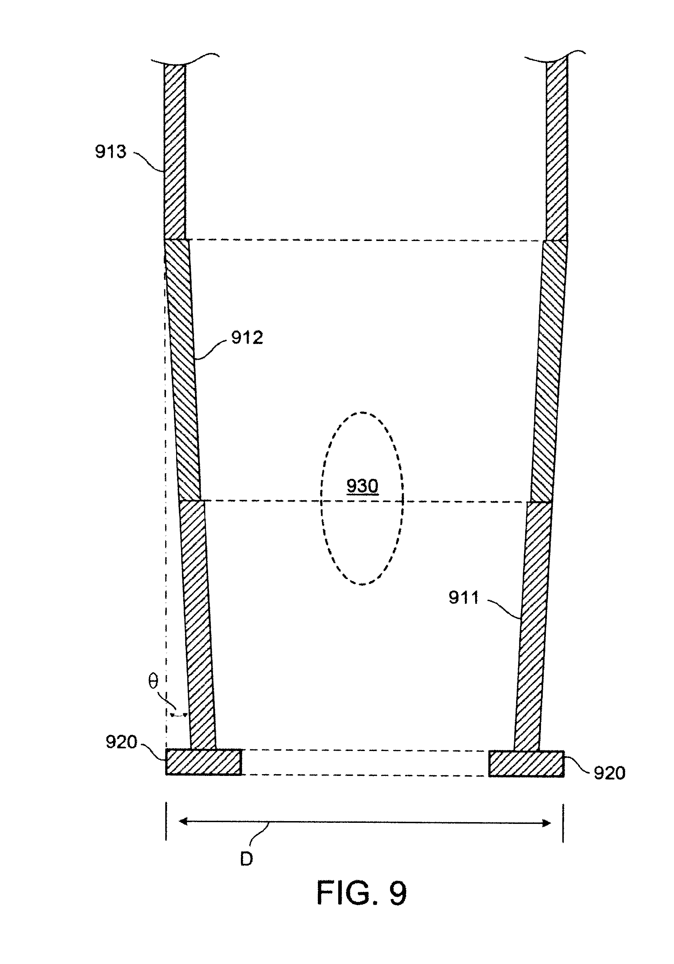

FIG. 9 illustrates a cross-sectional view of the first few cans in the bottom section of an exemplary wind turbine tower, according to another aspect of the present invention. The first two cans 911 and 912 have a reverse taper profile. The thickness of the cans may decrease as the height increases. For example, the side wall thickness of the first can 911 may be about 20 mm to about 50 mm, the thickness of the second can 912 and third can 913 may be about 15 mm to about 50 mm. The angle θ between a vertical line (the vertical dotted line in FIG. 9) and the side walls of cans 911 and 912 is about one to about five degrees. However, angles above and below this range could also be employed, as desired in the specific application.

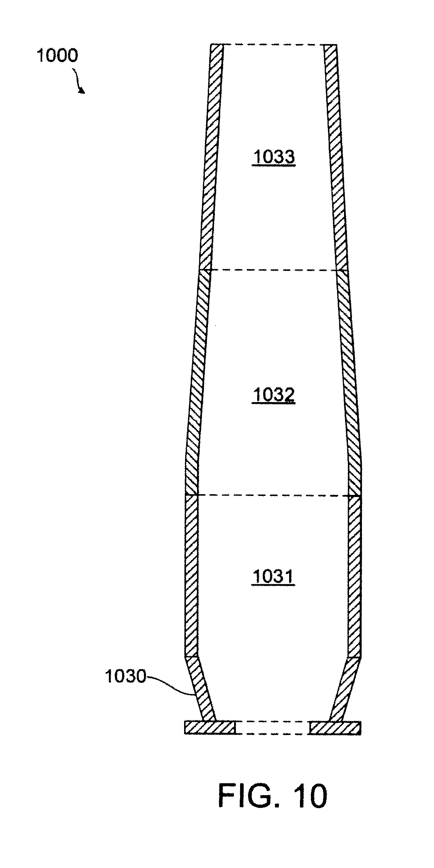

FIG. 10 illustrates a cross-sectional view of a wind turbine tower 1000, according to an aspect of the present invention. The tower 1000 may be comprised of three main sections, a bottom section 1031, middle section 1032 and top section 1033. Each main section may be comprised of a plurality of individual cylindrical cans, which are typically a cylinder of rolled steel. However, the tower sections may be fabricated as one integral item or from a plurality of individual sections. Bottom section 1031, in this example, contains at least one reverse taper portion 1030. The thickness and diameter of the sections may vary, but the lower portions of the tower generally have a greater thickness than the higher tower portions. However, the thickness of each portion of tower 1000 may be selected for the specific application and can have any appropriate thickness.

The angle between a vertical line and the side wall of reverse taper portion 1030 can be about one to about five degrees. However, angles above and below this range could also be employed, as desired in the specific application. The maximum diameter of the tower 1000 can be about 13 feet 6 inches (∼ 4.1 m) or less. However, it is to be understood that diameters above and below this range could also be employed, as desired in the specific application. Various embodiments of the present invention provide a wind turbine tower having at least one reverse taper portion near the base of the tower that has an increasing diameter with increasing elevation. This reverse taper portion may be contained within one can, or may be distributed over two or more cans. In towers having a "non-can" type construction, the reverse taper may be located on the lower portion of the tower.

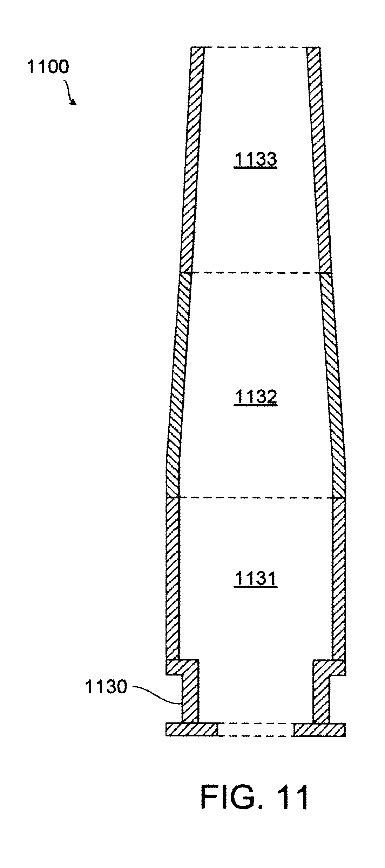

FIG. 11 illustrates a cross-sectional view of a wind turbine tower 1100, according to an aspect of the present invention. The tower 1100 may be comprised of three main sections, a bottom section 1131, middle section 1132 and top section 1133. Bottom section 1131, in this example, contains at least one stepped portion 1130. The maximum diameter of the tower 1100 can be about 13 feet 6 inches (∼ 4.1 m) or less. However, it is to be understood that diameters above and below this range could also be employed, as desired in the specific application.

An angled portion 1030 and stepped portion 1130 have been shown in the drawings. However, it is to be understood that any suitable shape could be employed for the reverse taper portion near the base of the tower. For example, the reverse taper portion could have a straight, curved, compound curved or any other suitable shape.

Typically, rail carriers permit items of a maximum weight, width, height and length. The tower, according to aspects of the present invention, can be sized to fit within these limitations. The weight of each tower section can be designed to be under about 140,000 lbs (∼ 65,000 kg), or under any weight limit imposed by typical rail carriers or trucking companies. The width and height of each tower section can be designed to be under about 13 feet 6 inches (∼ 4.1 meters), or under any height and/or width limit imposed by typical rail carriers. The length of each tower section can be designed to be under about 89 feet (∼ 27 meters), or under any length limit imposed by typical rail carriers. Rail transport outside the U.S. is also constrained by similar considerations of weight, width, height and length, but with sizes specific to the locale. Accordingly, an improved tower has been provided that can be shipped by rail, enabling less costly transportation for large towers. A single train can transport many wind turbine towers, whereas at least three trucks were required to transport a single tower.

The present invention was described in conjunction with a tower for a wind turbine; however, it is to be understood that the tower, according to aspects of the present invention, may be useful for any application needing elevated towers. For example, the present invention could be applied to electrical utility power transmission wire towers, communication towers, on or off-shore wind turbine towers, lighthouses, fire monitoring towers, agricultural silos, residential or commercial applications, and any other application requiring a tower.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A tower comprising:
   a plurality of axial substantially tubular sections, the sections including an outer diameter no greater than a designated maximum diameter;
   wherein at least one of said plurality of axial substantially tubular sections includes at least one reverse taper portion located near a base of said tower, the at least one reverse taper portion having a first end, located near said base, having a first diameter and a second end opposed to the first end having a second diameter, where the first diameter is smaller than the second diameter.
2. The tower according to clause 1, the at least one reverse taper portion having a profile that is at least one of straight, stepped, curved, and compound curved.
3. The tower according to any preceding Clause, the designated maximum diameter being a maximum diameter permitted for rail transport, and wherein the designated maximum diameter is equal to or less than about 13 feet 6 inches.
4. The tower according to any preceding Clause, each of said plurality of axial substantially tubular sections having a weight no greater than a designated maximum weight, and wherein, the designated maximum weight is equal to or less than a weight permitted for rail transport.
5. The tower according to any preceding Clause, wherein the designated maximum weight is equal to or less than about 140,000 pounds.
6. The tower according to any preceding Clause, wherein each of said plurality of axial substantially tubular sections have a length no greater than a designated maximum length, and wherein, the designated maximum length is equal to or less than a length permitted for rail transport.
7. The tower according to any preceding Clause, wherein the designated maximum length is equal to or less than about 89 feet.
8. The tower according to any preceding Clause, wherein the at least one reverse taper portion is angled off of vertical by an angle θ, wherein θ is between about one and about five degrees.
9. The tower according to any preceding Clause, wherein said plurality of axial substantially tubular sections include a bottom section, at least a portion of said bottom section having said at least one reverse taper portion.
10. The tower according to any preceding Clause, said bottom section comprising:
   a plurality of substantially cylindrical stacked cans; and
   at least one can having a reverse taper disposed at or near a bottom of said tower.
11. The tower according to any preceding Clause, said bottom section comprising two cans having a reverse taper disposed at or near a bottom of said tower.
12. The tower according to any preceding Clause, wherein the at least one can having a reverse taper has a taper that is angled off of vertical by an angle θ, wherein θ is between about one and about five degrees.
13. The tower according to any preceding Clause, the at least one reverse taper portion comprising a stepped portion having a smaller diameter near the first end and a larger diameter near the second end.
14. The tower according to any preceding Clause, wherein the tower is a wind turbine tower.
15. A wind turbine tower comprising:
   a plurality of axial sections, the sections including an outer diameter no greater than a designated maximum diameter, the designated maximum diameter being a maximum diameter permitted for rail transport; and
   wherein at least one of said plurality of axial sections includes at least one reverse taper portion located near a base of said wind turbine tower, the at least one reverse taper portion having a first end, located near said base, having a first diameter and a second end opposed to the first end having a second diameter, where the first diameter is smaller than the second diameter.
16. The wind turbine tower according to any preceding Clause, wherein the designated maximum diameter is equal to or less than about 13 feet 6 inches.
17. The wind turbine tower according to any preceding Clause, wherein each of the axial sections has a weight no greater than a designated maximum weight, the designated maximum weight being equal to or less than a weight permitted for rail transport; and
   wherein each of the axial sections have a length no greater than a designated maximum length, the designated maximum length being equal to or less than a length permitted for rail transport.
18. The wind turbine tower according to any preceding Clause, wherein the plurality of axial sections include a bottom section, at least a portion of said bottom section having the at least one reverse taper portion, and wherein the at least one reverse taper portion is angled off of vertical by an angle θ, wherein θ is between about one and about five degrees.
19. The wind turbine tower according to any preceding Clause, said bottom section comprising:
   a plurality of substantially cylindrical stacked cans; and
   at least one reverse taper can having a diameter that increases with increasing height, the at least one reverse taper can disposed at or near a bottom of said wind turbine tower.
20. The wind turbine tower according to any preceding Clause, said bottom section comprising at least two reverse taper cans disposed at or near a bottom of said wind turbine tower.

## Claims

1. A tower (1000) comprising:
a plurality of axial substantially tubular sections (1031, 1032, 1033), the sections including an outer diameter no greater than a designated maximum diameter;
wherein at least one of said plurality of axial substantially tubular sections includes at least one reverse taper portion (1030) located near a base of said tower, the at least one reverse taper portion (1030) having a first end, located near said base, having a first diameter and a second end opposed to the first end having a second diameter,
where the first diameter is smaller than the second diameter.

2. The tower according to Claim 1, the at least one reverse taper portion (1030) having a profile that is at least one of straight, stepped, curved, and compound curved.

3. The tower according to any preceding Claim, the designated maximum diameter being a maximum diameter permitted for rail transport.

4. The tower according to any preceding Claim, each of said plurality of axial substantially tubular sections (1031, 1032, 1033) having a weight no greater than a designated maximum weight, and wherein, the designated maximum weight is equal to or less than a weight permitted for rail transport; and
wherein each of said plurality of axial substantially tubular sections (1031, 1032, 1033) have a length no greater than a designated maximum length, and wherein, the designated maximum length is equal to or less than a length permitted for rail transport.

5. The tower according to any preceding Claim, wherein the at least one reverse taper portion (1030) is angled off of vertical by an angle θ, wherein θ is between about one and about five degrees.

6. The tower according to any preceding Claim, wherein said plurality of axial substantially tubular sections (1031, 1032, 1033) include a bottom section (1031), at least a portion of said bottom section (1031) having said at least one reverse taper portion (1030).

7. The tower according to Claim 6, said bottom section (1031) comprising:
a plurality of substantially cylindrical stacked cans (710, 812, 813); and
at least one can (710) having a reverse taper disposed at or near a bottom of said tower.

8. The tower according to any preceding Claim, wherein the at least one can (710) having a reverse taper has a taper that is angled off of vertical by an angle θ, wherein θ is between about one and about five degrees.

9. The tower according to any preceding Claim, the at least one reverse taper portion (1030) comprising a stepped portion (1130) having a smaller diameter near the first end and a larger diameter near the second end.

10. The tower according to any preceding Claim, wherein the tower is a wind turbine tower.
